# EUROPÄISCHE PATENTSCHRIFT

(11) **EP 2 460 238 B1**
(45) Veröffentlichungstag und Bekanntmachung des Hinweises auf die Patenterteilung: **13.11.2013**
(21) Anmeldenummer: 11729929.7
(22) Anmeldetag: 30.05.2011
(51) Int. Cl.: H01S 3/03, H01S 3/038, H01S 3/223

(54) **BANDLEITERLASER**
STRIPLINE LASER
LASER CONDUCTEUR EN FORME DE BANDE

(30) Priorität: 06.09.2010 DE 102010040298; 08.06.2010 DE 102010029821
(43) Veröffentlichungstag der Anmeldung: 06.06.2012
(73) Patentinhaber: Rofin-Sinar Laser GmbH, 22113 Hamburg (DE)
(72) Erfinder: HAGE, Hermann, 21033 Hamburg (DE); SCHOLZ, Volker, 23554 Lübeck (DE); ENGEL, Florian, 22761 Hamburg (DE)
(74) Vertreter: Meissner, Bolte & Partner
(86) Internationale Anmeldenummer: PCT/EP2011/058812
(87) Internationale Veröffentlichungsnummer: WO 2011/154272

(56) Entgegenhaltungen:
- EP-A2- 0 444 442
- US-A- 3 569 859
- US-A- 4 875 218
- THIERRY TEUMA: "Mode selectivity using selective layered and combined metallic-dielectric electrodes in slab waveguide resonators", PROCEEDINGS OF SPIE, Bd. 4184, 1. Januar 2001 (2001-01-01), Seiten 286-290, XP55007646, ISSN: 0277-786X, DOI: 10.1117/12.414072

## Beschreibung

Die Erfindung bezieht sich auf einen Bandleiterlaser, wie er beispielsweise aus der EP 0 305 893 A2 oder der US 4,719,639 A bekannt ist.

Bei einem solchen Bandleiter- oder Slablaser handelt es sich um einen Laser, dessen Resonator eine Kombination aus einem Wellenleiter-Resonator und einem instabilen Resonator des positiven oder negativen Zweiges ist. Bei einem solchen Bandleiterlaser befindet sich ein Kohlendioxid CO₂ enthaltendes Gasgemisch in einem zwischen zwei flachen plattenförmigen Elektroden gebildeten schmalen Entladungsraum. Durch Anlegen eines hochfrequenten elektromagnetischen Feldes wird das zwischen den Elektroden befindliche Gasgemisch angeregt. Gegenüber den Stirnflächen des auf diese Weise gebildeten schmalen quaderförmigen Entladungsraumes ist jeweils ein Resonatorspiegel angeordnet. Die Resonatorspiegel bilden in einer parallel zu den Flachseiten der Elektroden orientierten Ebene einen instabilen konfokalen Resonator mit freier Strahlpropagation. Senkrecht dazu werden die Ausbreitungsbedingungen der innerhalb des Entladungsraumes entstehenden elektromagnetischen Strahlung durch die Wellenleitereigenschaften der Elektroden festgelegt.

Die Elektroden bestehen aus Metall oder einem dielektrischen Material. In der US 4,719,639 A ist als geeigneter Werkstoff für die Elektroden ein elektrisch leitfähiges Metall, beispielsweise Aluminium, oder ein Dielektrikum, beispielsweise Aluminiumoxid Al₂O₃, genannt, wobei im letzteren Fall auf die dem Entladungsraum abgewandte Seite ein elektrisch leitfähiges Metall angeordnet werden muss.

Auch aus der EP 0 444 442 A2 ist es bekannt, eine aus Aluminium bestehende Elektrode an ihrer dem Entladungsraum zugewandten Oberfläche durch eine aus Aluminiumoxid Al₂O₃ bestehende Schicht zu passivieren.

In einem solchen Laser ist die Strahlverteilung in Richtung der instabilen Achse, d.h. parallel zu den Elektroden und zur Stirnfläche des Entladungsraumes im Wesentlichen durch die Geometrie der Resonatorspiegel festgelegt. In der zur instabilen Achse senkrechten Wellenleiterachse haben die Oberflächen der Elektroden als begrenzende Wand des Wellenleiters entscheidenden Einfluss auf die Ausbildung der Strahlverteilung in dieser Richtung. Die Eigenschaften der Oberfläche, d.h. ihre Rauheit und der Werkstoff aus dem sie bestehen, sowie ihr gegenseitiger Abstand bestimmen, welcher Resonatormode die günstigsten Ausbreitungsbedingungen vorfindet. So ist es beispielsweise aus der US 2010/0118898 A1 bekannt, durch in die Elektroden eingebrachte Aussparungen eine Modenselektion derart herbeizuführen, dass der Laser stabil in einem Grundmode schwingt. Die genannten Parameter haben darüber hinaus nicht nur Einfluss auf die geometrischen Strahleigenschaften sondern auch auf die vom Laser emittierte Wellenlänge. Dabei hat sich gezeigt, dass ein Bandleiterlaser, dessen Elektroden auf der dem Entladungsraum zugewandten Flachseite mit einer Schicht aus Aluminiumoxid Al₂O₃ versehen ist, nahezu ausschließlich im 10,6µm-Band arbeitet.

Für bestimmte Anwendungsfälle ist es jedoch gewünscht, Laserstrahlung im 9,3µm- oder 9,6µm-Band zu verwenden. Hierzu ist es aus der US 5,412,681 A bekannt, wellenlängenselektive Resonatorspiegel einzusetzen. Dies führt jedoch im Hochleistungsbereich zu unbefriedigenden Ergebnissen, da die hierzu erforderliche Beschichtung der Resonatorspiegel für sehr hohe Laserleistungen weniger geeignet ist. Alternativ hierzu ist es auch bekannt, eine gewünschte Wellenlängenselektivität durch Wahl der Isotopenzusammensetzung des Gasgemisches einzustellen. Eine solche Vorgehensweise ist jedoch nur bei sogenannten sealed-off-Lasern, bei denen das Lasergas nicht ausgetauscht werden muss, technisch und wirtschaftlich sinnvoll.

Der Erfindung liegt daher die Aufgabe zu Grunde, einen Bandleiterlaser anzugeben, mit dem es möglich ist, Laserstrahlung im 9,3µm- und/oder im 9,6µm-Band zu erzeugen.

Die genannte Aufgabe wird gemäß der Erfindung gelöst mit einem Bandleiterlaser mit den Merkmalen des Patentanspruches 1. Ein solcher Bandleiterlaser enthält als laseraktives Medium ein Kohlendioxid CO₂ enthaltendes Gasgemisch, das sich zwischen zwei einander mit ihren Flachseiten gegenüberliegenden plattenförmigen Elektroden befindet. Die Elektroden legen einen Entladungsraum fest, an dessen einander gegenüberliegenden Stirnseiten jeweils ein Resonatorspiegel angeordnet ist, die parallel zu den Flachseiten einen instabilen Resonator bilden, wobei die Elektroden auf ihren einander gegenüberliegenden Flachseiten mit einer Passivierungsschicht versehen sind, die bei zumindest einer Elektrode in einem zumindest eine Teilfläche der Flachseite überdeckenden Bereich Siliciumdioxid SiO₂ enthält, wobei der Abstand der Elektroden derart eingestellt ist, dass die Schwächung von Laserstrahlen im 10,3µm- und im 10,6µm-Band größer ist als die Schwächung von Laserstrahlen im 9,3µm- und/oder 9,6µm-Band.

Die Erfindung beruht dabei auf der Erkenntnis, dass durch die zumindest teilweise Beschichtung der Elektroden mit einem Siliciumdioxid SiO₂ enthaltenden Werkstoff, vorzugsweise mit einer Schichtdicke von etwa 0,5 bis 5µm, die Schwächung, die ein sich innerhalb des Wellenleiters ausbreitender Laserstrahl erfährt, im 10,3µm- und im 10,6µm-Band durch Wahl des gegenseitigen Abstandes der Elektroden so eingestellt werden kann, dass diese größer ist als im 9,3µm- und/oder im 9,6µm-Band. Aufgrund dieser höheren Verluste im 10,3µm- und im 10,6µm-Band wird deren Anschwingen im Resonator verhindert, so dass ein in dieser Weise aufgebauter Bandleiterlaser stabil im 9,3µm- und/oder im 9,6µm-Band arbeitet, wobei durch optimierte Auslegung eines dieser beiden Bänder selektiert werden kann. Der Effekt ist dabei umso ausgeprägter, je höher der Anteil des Siliciumdioxids SiO₂ in der Passivierungsschicht ist.

Eine besonders wirksame Unterdrückung kann erzielt werden, wenn der Volumenanteil von Siliciumdioxid SiO₂ am Gesamtvolumen der auf beide Elektroden aufgebrachten Passivierungsschicht wenigstens 25% beträgt oder alternativ hierzu die Teilfläche bzw. die Summe aller Teilflächen wenigstens 25% der Gesamtfläche beider Flachseiten beträgt und die Passivierungsschicht im Bereich der Teilfläche bzw. der Teilflächen aus Siliciumdioxid SiO₂ besteht.

Ein Anschwingen wird am besten unterdrückt, wenn in einer besonders vorteilhaften Ausgestaltung der Erfindung die Passivierungsschicht beider gegenüberliegenden Flachseiten aus Siliciumdioxid SiO₂ besteht.

Zur weiteren Erläuterung der Erfindung wird auf die Figuren verwiesen. Es zeigen:
- Fig. 1: bis 3 jeweils alternative Ausführungsbeispiele eines Bandleiterlasers gemäß der Erfindung in einem schematischen Längsschnitt,
- Fig. 4: ein Diagramm, in dem für unterschiedliche Wellenlängen der errechnete Verlust bei einem Umlauf im Resonator eines aus SiO₂ aufgebauten eindimensionalen Wellenleiters gegen den Elektrodenabstand aufgetragen ist.

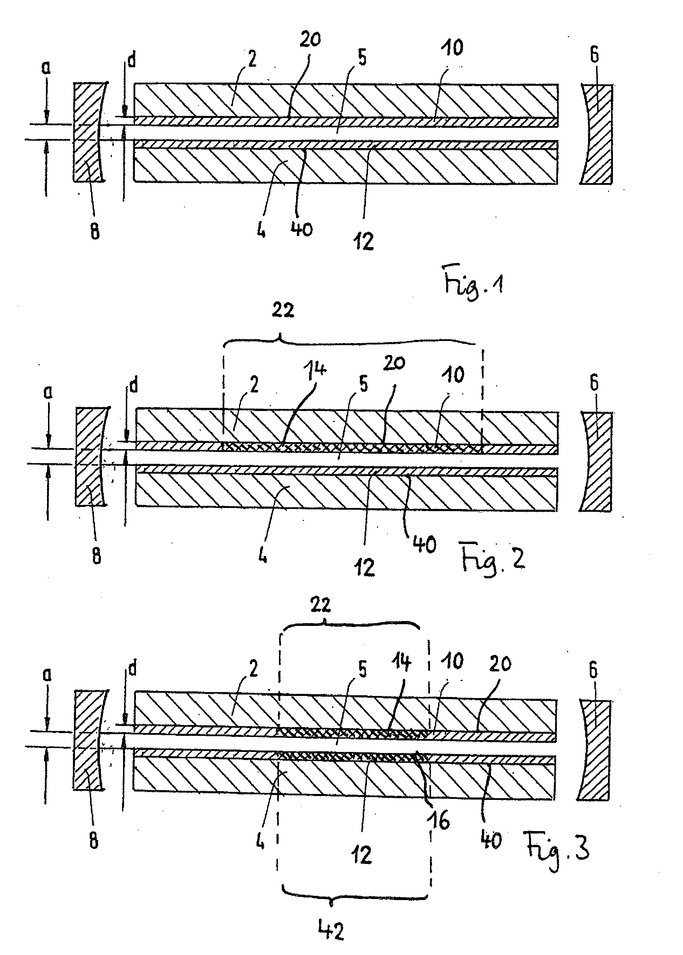

Gemäß Fig. 1 umfasst ein Bandleiterlaser in einem Abstand a einander gegenüberliegend angeordnete plattenförmige Elektroden 2 und 4, zwischen denen sich als Lasergas ein Kohlendioxid CO₂ enthaltendes Gasgemisch befindet. Die Elektroden 2 und 4 legen einen schmalen, quaderförmigen Entladungsraum 5 fest, in dem das Lasergas durch eine an die Elektroden 2 und 4 angelegte HF-Spannung angeregt wird. An den einander gegenüberliegenden Stirnseiten des Entladungsraumes 5 sind Resonatorspiegel 6 und 8 angeordnet, die in einer senkrecht zur Zeichenebene verlaufenden Ebene einen instabilen konfokalen Resonator bilden, bei dem es sich im dargestellten Beispiel um einen Negativzweig-Resonator handelt. Alternativ hierzu kann auch ein Positivzweig-Resonator vorgesehen sein.

Die Elektroden 2 und 4 bestehen im Ausführungsbeispiel aus Kupfer Cu oder einer Kupfer Cu enthaltenden Legierung, die an ihren einander zugewandten Flachseiten 20, 40 mit einer Passivierungsschicht 10 bzw. 12 versehen sind, deren Schichtdicke d zwischen 0,5µm und 5µm beträgt, d.h. sehr viel kleiner ist als der Abstand a und in der Figur übertrieben eingezeichnet ist. Die Passivierungsschichten 10, 12 enthalten Siliciumdioxid SiO₂, wobei in einer bevorzugten Ausführungsform der Volumenanteil von Siliciumdioxid SiO₂ am Gesamtvolumen der auf beide Elektroden 2, 4 aufgebrachten Passivierungsschichten 10, 12 wenigstens 25% beträgt. Die restlichen Bestandteile der Passivierungsschichten 10, 12 können beispielsweise aus Aluminiumoxid Al₂O₃ bestehen. In einer besonders bevorzugten Ausführungsform bestehen beide Passivierungsschichten 10, 12 aus Siliciumdioxid SiO₂.

Im Ausführungsbeispiel der Fig. 2 ist eine alternative Ausgestaltung veranschaulicht, bei der nur eine der Elektroden, im Beispiel die Elektrode 2 mit einer Passivierungsschicht 10 versehen ist, die nur in einem eine Teilfläche 22 der Flachseite 20 der Elektrode 2 überdeckenden bzw. einnehmenden durch Kreuzschraffur hervorgehobenen Bereich 14 Siliciumdioxid SiO₂ enthält, die kleiner ist als die Fläche einer Flachseite 20 der Elektrode 2.

Gemäß Fig. 3 enthalten in einer alternativen Ausgestaltung beide Passivierungsschichten 10, 12 in einem eine Teilfläche 22 bzw. 42 überdeckenden Bereich 14 bzw. 16 Siliciumdioxid SiO₂, wobei die Teilflächen 22, 42 nicht zwingend einander gegenüberliegen müssen. Ebenso müssen die in Fig. 2 und 3 dargestellten Teilflächen 22, 42 bzw. Bereiche 14, 16 nicht notwendig eine zusammenhängende Fläche bilden.

In den Ausführungsformen gemäß Fig. 2 und 3 sind die Teilfläche 22 bzw. die Teilflächen 22, 42 und der im Bereich dieser Teilfläche 14, 16 in diesen in den Passivierungsschichten 10, 12 jeweils vorhandene Anteil an Siliciumdioxid SiO₂ vorzugsweise so bemessen, dass der Volumenanteil von Siliciumdioxid SiO₂ am Gesamtvolumen der auf beide Elektroden 2, 4 aufgebrachten Passivierungsschichten 10 bzw. 12 wenigstens 25% beträgt. Mit anderen Worten: Wenn die Teilfläche 22 bzw. die Summe aller Teilflächen 22, 42 nur 25% der Gesamtfläche beider Flachseiten 20, 40 beider Elektroden 2, 4 beträgt, besteht die Passivierungsschicht 10, 12 im Bereich dieser Teilfläche 22 bzw. Teilflächen 22, 42 vorzugsweise vollständig aus Siliciumdioxid SiO₂.

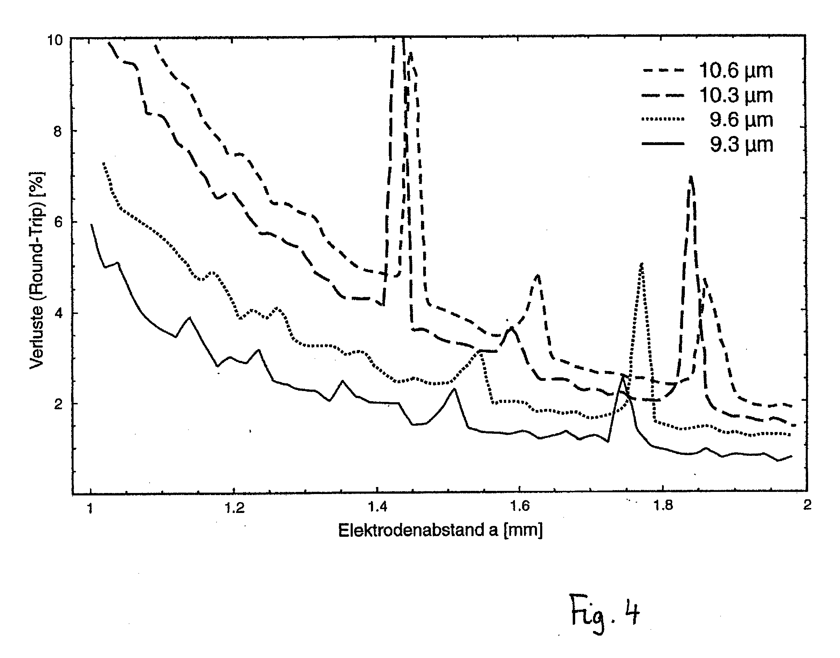

Im Diagramm der Fig. 4 ist der errechnete Verlust V pro Umlauf in einem eindimensionalen Wellenleiter mit einer Länge von 1,33m in Abhängigkeit vom Abstand a der Elektroden für die Wellenlängen 9, 3µm, 9,6µm, 10,3µm bzw. 10,6µm aufgetragen, wenn die auf die Elektroden aufgebrachte Passivierungsschicht aus Siliciumdioxid SiO₂ besteht. Der Unterschied in den Verlusten zwischen den einzelnen Bändern kann durch geeignete Wahl des Abstandes a an den jeweiligen Bedarf angepasst werden. Für einen Elektrodenabstand a = 1,7mm ergeben sich dabei bei 9,3µm, 9,6µm, 10,3µm und 10,6µm etwa folgende prozentuale Verluste: 1,6%, 1,8%, 2,1% bzw. 2,3%. Diese haben zur Folge, dass der Resonator nur im 9,3µm-Band anschwingt. Dem Diagramm ist außerdem zu entnehmen, dass bei einem Elektrodenabstand a = 1,75mm das 9,6µm-Band die geringsten Verluste oder die geringste Schwächung aufweist und dementsprechend selektiert wird. Bei diesem Elektrodenabstand ist außerdem die Schwächung des 9,3µm-Bandes höher als die Schwächung des 10,3µm-Bandes und etwa gleich der Schwächung des 10,6µm-Bandes. Mit anderen Worten: um ein Anschwingen des 10,3µm- und des 10,6µm-Bandes zu verhindern, muss die Schwächung wenigstens entweder des 9,3µm-Bandes oder des 9,6µm-Bandes geringer sein als die Schwächung des 10,3µm-Bandes und des 10,6µm-Bandes.

Ergänzend zu der gemäß der Erfindung vorgeschlagenen Beschichtung der Elektroden mit Siliciumdioxid SiO₂ können bei Bandleiterlasern, die für geringere Laserleistungen ausgelegt sind, auch die Resonatorspiegel mit einer wellenlängenselektiven Beschichtung versehen sein, um zusätzlich das Anschwingen in den nicht gewünschten Bändern zu unterdrücken. Ebenso ist es ergänzend möglich, als laseraktives Medium ein Isotopengemisch einzusetzen, mit dem ebenfalls ungewünschte Bänder unterdrückt bzw. gewünschte Bänder selektiert werden können. Besonders in diesen Fällen kann der Anteil des Siliciumdioxids SiO₂ in der auf die Elektroden aufgebrachte Passivierungsschicht entsprechend verringert werden.

## Patentansprüche

1. Bandleiterlaser mit einem Kohlendioxid CO₂ enthaltenden Gasgemisch als laseraktives Medium, das sich zwischen zwei einander mit ihren Flachseiten (20,40) gegenüberliegenden plattenförmigen Elektroden (2,4) befindet, die einen Entladungsraum (5) festlegen, an dessen einander gegenüberliegenden Stirnseiten jeweils ein Resonatorspiegel (6,8) angeordnet ist, die parallel zu den Flachseiten (20,40) einen instabilen Resonator bilden, und die auf ihren einander gegenüberliegenden Flachseiten (20,40) mit einer Passivierungsschicht (10,12) versehen sind, **dadurch gekennzeichnet, dass** die Passivierungsschicht (10, 12) bei zumindest einer Elektrode (2,4) in einem zumindest eine Teilfläche (22,42) der Flachseite (20,40) überdeckenden Bereich (14,16) Siliciumdioxid SiO₂ enthält, wobei der Abstand (a) der Elektroden (2, 4) derart eingestellt ist, dass die Schwächung von Laserstrahlen im 10,3µm- und im 10,6µm-Band größer ist als die Schwächung von Laserstrahlen im 9,3µm- und/oder im 9,6µm-Band.

2. Bandleiterlaser nach Anspruch 1, bei dem der Volumenanteil von Siliciumdioxid SiO₂ am Gesamtvolumen der auf beide Elektroden (2,4) aufgebrachten Passivierungsschicht (10,12) wenigstens 25% beträgt.

3. Bandleiterlaser nach Anspruch 2, bei dem die Teilfläche (22) bzw. die Summe aller Teilflächen (22,42) wenigstens 25% der Gesamtfläche beider Flachseiten beträgt und die Passivierungsschicht (10,12) im Bereich der Teilfläche (22) bzw. der Teilflächen (22,42) aus Siliciumdioxid SiO₂ besteht.

4. Bandleiterlaser nach Anspruch 1, 2 oder 3, bei dem die Schichtdicke der Passivierungsschicht (10,12) im Bereich der Teilfläche (22) bzw. Teilflächen (22,42) zwischen 0,5 und 5µm beträgt.

5. Bandleiterlaser nach einem der vorhergehenden Ansprüche, bei dem die Passivierungsschicht (10,12) beider gegenüberliegenden Flachseiten (20,40) aus Siliciumdioxid SiO₂ besteht.

## Claims

1. Stripline laser with a gas mixture containing carbon dioxide CO₂ as a laser-active medium, which is situated between two plate-shaped electrodes (2, 4), the flat sides (20, 40) of which lie opposite each other, which constitute a discharge chamber (5), on whose end sides, which are arranged opposite each other, is arranged a respective resonator mirror (6, 8), which form an unstable resonator parallel to the flat sides (20, 40), and which are provided with a passivation layer (10, 12) on the flat sides (20, 40) which lie opposite each other, **characterised in that**,
the passivation layer (10, 12) contains silicon dioxide SiO₂ in a region (14, 16) covering at least one partial area (22, 42) of the flat side (20, 40) of at least one electrode (2, 4), wherein the distance (a) between the electrodes (2, 4) is so adjusted that the attenuation of laser beams in the 10.3µm and in the 10.6µm band is greater than the attenuation of laser beams in the 9.3µm and/or in the 9.6µm band.

2. Stripline laser according to claim 1,
wherein the percent by volume of silicon dioxide SiO₂ in the total volume of the passivation layer (10, 12) applied to both electrodes (2, 4) is at least 25%.

3. Stripline laser according to claim 2,
wherein the partial area (22), or the sum of all partial areas (22, 42), is at least 25% of the total area of both flat sides and the passivation layer (10, 12) in the region of the partial area (22), or the partial areas (22, 42), consists of silicon dioxide SiO₂.

4. Stripline laser according to claim 1, 2 or 3,
wherein the layer thickness of the passivation layer (10, 12) in the region of the partial area (22), or the partial areas (22, 42), is between 0.5 and 5µm.

5. Stripline laser according to one of the preceding claims,
wherein the passivation layer (10, 12) of both flat sides (20, 40), which lie opposite each other, consists of silicon dioxide SiO₂.

## Revendications

1. Laser conducteur à bande comprenant un mélange gazeux contenant du dioxyde de carbone CO₂ comme milieu actif, qui se trouve entre deux électrodes (2,4) en forme de plateau opposées par leurs côtés (20,40) plats et déterminant un espace (5) de décharge, sur les côtés frontaux opposés duquel sont disposés respectivement des miroirs (6,8) de résonateur, qui forment un résonateur instable parallèlement aux côtés (20,40) plats et qui sont pourvus d'une couche (10,12) de passivation sur leurs côtés (20,40) plats opposés l'un à l'autre, **caractérisé en ce que** la couche (10,12) de passivation contient, pour au moins une électrode (2,4), du dioxyde de silicium SiO₂ dans une zone (14,16) recouvrant au moins une surface (22,42) partielle du côté (20,40) plat, la distance (a) entre les électrodes (2,4) étant réglée de manière à ce que l'affaiblissement du faisceau laser dans la bande 10,3µm et dans la bande 10,6µm soit plus grand que l'affaiblissement du faisceau laser dans la bande 9,3µm et/ou dans la bande 9,6µm.

2. Laser conducteur à bande suivant la revendication 1, dans lequel la proportion en volume du dioxyde de silicium SiO₂ par rapport au volume total de la couche (10,12) de passivation déposée sur les deux électrodes (2,4) est d'au moins 25%.

3. Laser conducteur à bande suivant la revendication 2, dans lequel les surfaces (22) partielles ou la somme de toutes les surfaces (22,42) partielles représentent au moins 25% de la surface totale des deux côtés plats et la couche (10,12) de passivation est en dioxyde de silicium SiO₂ dans la zone de la surface (22) partielle ou des surfaces (22,42) partielles.

4. Laser conducteur à bande suivant la revendication 1, 2 ou 3, dans lequel l'épaisseur de la couche (10,12) de passivation dans la zone de la surface (22) partielle ou des surfaces (22,42) partielles est comprise entre 0,5 et 5µm.

5. Laser conducteur à bande suivant l'une des revendications précédentes, dans lequel la couche (10,12) de passivation des deux côtés (20,40) plats opposés est en dioxyde de silicium SiO₂.
